# EUROPEAN PATENT SPECIFICATION

(11) **EP 3 990 292 B1**
(45) Date of publication and mention of the grant of the patent: **26.07.2023**
(21) Application number: 20735242.8
(22) Date of filing: 24.06.2020
(51) Int. Cl.: B60C 5/14, B60C 9/02

(54) **BODY PLY SKIM LAYER**
GUMMISCHICHT EINER KARKASSLAGE
COUCHE DE GOMMAGE DE NAPPE CARCASSE

(30) Priority: 28.06.2019 IT 201900010449
(43) Date of publication of application: 04.05.2022
(73) Proprietor: Bridgestone Europe NV/SA, 1930 Zaventem (BE)
(72) Inventor: FIORENZA, Paolo, 00128 Roma (IT); ANDREINI, Giacomo, 00128 Roma (IT)
(74) Representative: Marchetti, Alessio
(86) International application number: PCT/IB2020/055978
(87) International publication number: WO 2020/261146

(56) References cited:
- EP-A1- 3 466 727
- EP-A2- 0 705 717
- WO-A1-02/36367

## Description

The present invention relates to a Body Ply Skim layer having characteristics such as to allow for a drastic reduction in the thickness of the innerliner layer, if not its complete elimination.

The innerliner is an inner rubber layer that, insofar as it is substantially impermeable to air, is used in tubeless pneumatic tyres in order to maintain under pressure the air within the inner cavity of the pneumatic tyre. Moreover, the innerliner must ensure that oxygen remains as much as possible confined within the inner cavity and does not spread within those compounds that constitute the other parts of the pneumatic tyre, thereby leading to degradation phenomena.

In the manufacture of pneumatic tyres, in order to ensure the required standards of strength and durability, reinforcing plies are used that are made from a thermoplastic material (e.g. nylon, rayon, polyester, aramid, PET). The rubber layer arranged such as to encompass the plies is indicated with the English wording "body ply skim" and is, generally, in direct contact with the innerliner layer.

As is known, within the pneumatic tyre industry there is a need to reduce the weight of the pneumatic tyre with positive repercussions in terms of the overall energy consumption of the vehicle and the rolling resistance of the same.

Examples of such tyres are disclosed in EP 0705717 A2, WO 02/36367 A1 and EP 3466727 A1.

As may be immediately obvious to a person skilled in the art, a reduced thickness of the innerliner layer or, indeed, its elimination, necessarily translates into a lower quantity of material used, with the obvious advantages that this entails both in terms of productivity and in terms of lower weight for the pneumatic tyre itself, with positive effects upon the overall energy consumption of the vehicle and upon the rolling resistance.

One of the problems that may arise once the innerliner layer is thinned, if not indeed eliminated, concerns the possible exposure of the cords that constitute the reinforcing ply. In fact, as is known, during the vulcanization step the green pneumatic tyre is compressed between the walls of the mold by virtue of the action of a bladder that, in swelling, pushes the pneumatic tyre from within against the walls of the mold. During this step of vulcanizing the rubber layers, such as the innerliner, where present, and the body ply skim, in which the reinforcing plies are incorporated, are compressed under the action of the bladder, and the cords of the reinforcing plies necessarily approach the inner surface of the pneumatic tyre that defines the internal cavity of the pneumatic tyre.

From the above description it is immediately clear that if the innerliner is very thin or absent, the cords may either produce protuberances upon the inner surface of the pneumatic tyre, or, indeed, even emerge from the rubber layer and thus be exposed. As may be immediately apparent to a person skilled in the art, such possibilities necessarily lead to critical pneumatic tyre issues that compromise its operation.

The object of the present invention is to implement a solution that is capable of preventing the protrusion or emerging of the cords, where a very thin innerliner layer is used or where the innerliner layer is not used.

The inventors of the present invention have made a body ply skim layer in which the technical characteristics are such as to allow for severe thinning of the innerliner layer, or its complete removal, without the occurrence of the phenomena mentioned above.

The subject matter of the present invention is a pneumatic tyre according to claim 1.

By outer surface of the body ply skim is meant the surface of the body ply skim facing the tread of the pneumatic tyre; by inner surface of the body ply skim is meant the surface of the body ply skim directed towards the inner cavity of the pneumatic tyre.

Preferably, said asymmetry index AI is greater than -85 and less than -30.

Preferably, the body ply skim layer has a thickness of between 0.9 and 2.0 mm.

Preferably, said body ply skim layer is made with a compound comprising polyepihalohydrin rubber; epoxidized natural rubber as a cross-linkable unsaturated chain polymer base; a filler and a vulcanization system.

Here and hereinafter, by vulcanization system is meant a complex of ingredients comprising at least sulfur and accelerating compounds, which in the preparation of the compound are added in a final mixing step and have the purpose of promoting the vulcanization of the polymer base once the compound is subjected to a vulcanization temperature.

Here and hereinafter, the term "cross-linkable unsaturated chain polymer base" refers to any natural or synthetic non-cross-linked polymer capable of assuming all of the chemical-physical and mechanical characteristics typically assumed by elastomers upon cross-linking (vulcanization) with sulfur-based systems.

Preferably, the said filler is a material with a lamellar structure.

Preferably, the compound comprises: from 70 to 90 phr of said polyepihalohydrin rubber; from 5 to 25 of said epoxidized natural rubber (E-NR); and from 5 to 25 of natural rubber (NR); the ratio in phr between the E-NR and NR being between 0.2 and 5.0.

The quantities are expressed in phr, i.e., in parts per 100 parts of rubber, wherein rubber refers to the complex consisting of polyepihalohydrin, E-NR and NR.

Preferably, the ratio in phr between E-NR and NR being between 1.0 and 3.0.

Preferably, the polyepihalohydrin rubber is a rubber deriving from the epichlorohydrin homopolymer or from the epichlorohydrin/allyl-glycidyl ether copolymer or from the epichlorohydrin/ethylene oxide copolymer or from the epichlorohydrin/ethylene oxide/ allyl-glycidyl ether terpolymer.

For a better understanding of the invention, the following examples serve for illustrative and non-limiting purpose with the help of the attached figures, wherein:
- Figure 1 is a sectional view of a portion of a pneumatic tyre according to the invention;
- Figure 2 is a section of a portion of body ply skim layer according to the invention.

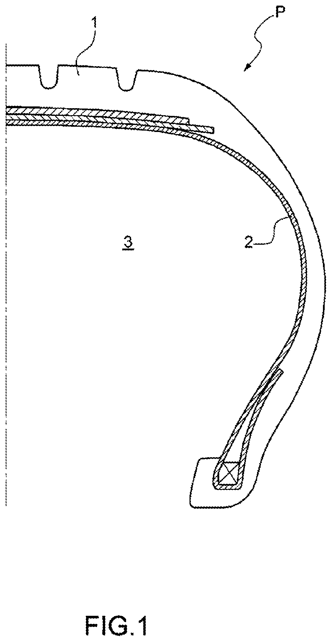

In Figure 1 there is indicated, in its entirety with P, a pneumatic tyre according to the present invention.

The pneumatic tyre P comprises a tread layer 1 and a body ply skim layer 2 that faces directly an inner cavity 3 of the pneumatic tyre P.

In particular, in the pneumatic tyre P, the body ply skim layer 2 faces directly the inner cavity 3 insofar as the presence of the innerliner layer is not envisaged.

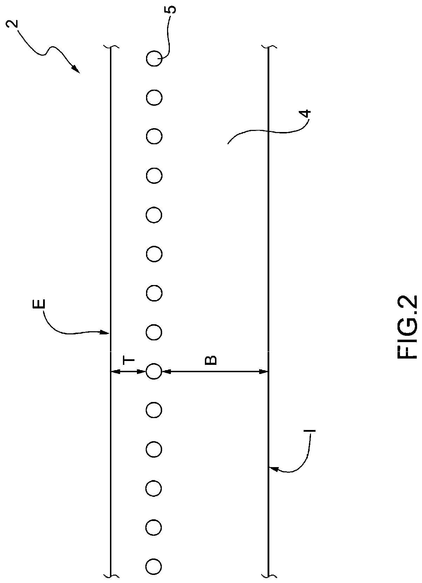

In Figure 2 there is indicated, in its entirety with 2, a body ply skim layer according to the present invention. The body ply skim layer consists of a single compound 4 and a reinforcing ply 5 accommodated within the single compound 4.

The body ply skim layer 2 comprises an outer surface E directed towards a tread 1 of the pneumatic tyre, and an inner surface I facing the inner cavity 3.

In Figure 2 there is indicated with T the distance between the cord 5 and the outer surface E, and with B the distance between the cord 5 and the inner surface I.

### EXAMPLES

Three pneumatic tyre were manufactured: the pneumatic tyre A represents a comparative example and comprises a body ply skim layer with a thickness equal to 1.2 mm in which a reinforcing ply of PET is embedded, having an AI equal to 0, and an innerliner layer with a thickness equal to 1.0 mm; the pneumatic tyre B represents a comparative example and comprises a body ply skim layer with a thickness equal to 1.2 mm in which a reinforcing ply of PET is embedded, having an AI equal to 0, and does not comprise any innerliner layer; the pneumatic tyre C represents an example according to the invention and comprises a body ply skim layer with a thickness equal to 1.2 mm in which a reinforcing ply of PET is embedded, having an AI equal to -49, and does not comprise any innerliner layer.

The pneumatic tyres A - C are the same in all respects except for the presence of the innerliner layer and the position of the PET reinforcing ply.

The body ply skim layer was manufactured using a compound which composition in phr is reported in Table I

**TABLE I**

| | A |
|---|---|
| NR | 15.0 |
| E-NR | 15.0 |
| Polyepihalohydrin rubber | 70.0 |
| CB | 40.0 |
| Sulfur | 2.0 |
| MBTS | 0.2 |
| TBBS | 0.8 |

NR stands for natural rubber that is made of a polymer base composed of natural origin cis-1,4-polyisoprene.

E-NR stands for epoxidized natural rubber, presenting a degree of epoxidation of 250.

The polyepihalohydrin rubber used is a rubber derived from the epichlorohydrin/ethylene oxide/allyl-glycidyl ether terpolymer marketed as T3000 by the company ZEON.

CB stands for carbon black belonging to the class N6.

MBTS is the acronym for mercaptobenzothiazole disulfide used as a vulcanization accelerant.

TBBS is the acronym for N-tert-butyl-2-benzothiazole sulfenamide used as a vulcanization accelerant.

### Preparation of the compound

The compound was made according to the standard procedure described below, which is not relevant to the purposes of the present invention.

### (1^{st} mixing step)

Before the start of the mixing, a mixer with tangential rotors (commonly called a Banbury) and an internal volume of between 230 and 270 liters was loaded with the polymer bases and the reinforcing filler, reaching a fill factor of between 66-72%.

The mixer was operated at a speed of between 40-60 revolutions/minute, and the mixture thus formed was discharged once a temperature of between 140-160°C had been reached.

### (2^{nd} mixing step)

The vulcanization system was added to the mixture obtained from the previous step, reaching a fill factor of between 63-670.

The mixer was operated at a speed of between 20-40 revolutions/minute, and the mixture thus formed was discharged once a temperature of between 100-110°C had been reached.

The pneumatic tyres A - C were manufactured by means of an equal vulcanization process.

Once manufactured, the pneumatic tyres were evaluated in terms of the weight of the innerliner+body ply skim (I+BPS) assembly, rolling resistance and Appearance.

Table II lists the assessments of the parameters described above.

The Appearance assessments derive from tactile and visual inspections on the part of an operator in the industry.

The data in relation to the weight are expressed in terms of variation of the weight of the I+BPS assembly of the pneumatic tyre A.

The rolling resistance values are indexed with respect to the relative value of the pneumatic tyre A and were detected in accordance with ISO28580 procedure

**TABLE II**

| | Pneumatic tyre A | Pneumatic tyre B | Pneumatic tyre C |
|---|---|---|---|
| Weight Variation I+BPS (g) | 0 | - 495.0 | - 495.0 |
| Rolling resistance* | 100 | 98 | 98 |
| Appearance | PROTRUBERANCES NO | PROTRUBERANCES YES | PROTRUBERANCES NO |

As is clear from the assessments of Table II, the solution, which is the subject matter of the present invention, offers the great advantage of being able to eliminate the innerliner layer, with the relative advantages in terms of weight and rolling resistance, without thereby provoking the exposure or emergence of the cords of the reinforcing ply. Furthermore, it is important to emphasize that the compound used also ensures the necessary impermeability to air, notwithstanding the lack of an innerliner.

## Claims

1. Pneumatic tyre (P) comprising a body ply skim layer (2) in which a reinforcing ply (5) is embedded; said reinforcing ply (5) being arranged at a distance T from an outer surface (E) of the body ply skim layer and at a distance B from an inner surface (I) of the body ply skim layer such as to define an asymmetry index AI equal to 100 x (T-B/T+B); said outer surface (E) being directed towards a tread (1) of the pneumatic tyre (P) and said inner surface (I) being directed towards an inner cavity (3) of the pneumatic tyre (P); said asymmetry index AI being greater than -100 and less than 0, said tyre being **characterized in that** said body ply skim layer (2) is made of a single rubber compound (4).

2. Pneumatic tyre according to claim 1, **characterized in that** said asymmetry index AI is greater than -85 and less than -30

3. Pneumatic tyre according to claim 1 or 2, **characterized in that** the body ply skim layer has a thickness of between 0.9 and 2.0 mm.

4. Pneumatic tyre according to one of the preceding claims, **characterized in that** said body ply skim layer is made with a compound comprising polyepihalohydrin rubber; epoxidized natural rubber as a cross-linkable unsaturated chain polymer base; a filler and a vulcanization system.

5. Pneumatic tyre according to claim 4, **characterized in that** the said filler is a material with a lamellar structure.

6. Pneumatic tyre according to claim 4 or 5, **characterized in that** the compound comprises: from 70 to 90 phr of said polyepihalohydrin rubber; from 5 to 25 of said epoxidized natural rubber (E-NR); and from 5 to 25 of natural rubber (NR); the ratio in phr between E-NR and NR being between 0.2 and 5.0.

7. Pneumatic tyre according to claim 6, **characterized in that** the ratio in phr between E-NR and NR is between 1.0 and 3.0.

8. Pneumatic tyre according to one of the claims from 4 to 7, **characterized in that** the polyepihalohydrin rubber is a rubber deriving from the epichlorohydrin homopolymer or from the epichlorohydrin/allyl-glycidyl ether copolymer or from the epichlorohydrin/ethylene oxide copolymer or from the epichlorohydrin/ethylene oxide/allyl-glycidyl ether terpolymer.

9. Pneumatic tyre according to one of the preceding claims, **characterized in that** said body ply skim layer (2) directly faces said inner cavity (3); said pneumatic tyre (P) being free of an innerliner layer.

## Patentansprüche

1. Luftreifen (P), umfassend eine Karkassenlagendeckschicht (2), wobei eine Verstärkungslage (5) eingebettet ist; wobei die Verstärkungslage (5) in einem Abstand T von einer äußeren Oberfläche (E) der Karkassenlagendeckschicht und in einem Abstand B von einer inneren Oberfläche (I) der Karkassenlagendeckschicht derart angeordnet ist, dass sie einen Asymmetrieindex AI gleich 100 x (T-B/T+B) definiert; wobei die äußere Oberfläche (E) zu einer Lauffläche (1) des Luftreifens (P) gerichtet ist und die innere Oberfläche (I) zu einem inneren Hohlraum (3) des Luftreifens (P) gerichtet ist; der Asymmetrieindex AI größer als -100 und kleiner als 0 ist, wobei der Reifen **dadurch gekennzeichnet ist, dass** die Karkassenlagendeckschicht (2) aus einer einzelnen Gummimischung (4) hergestellt ist.

2. Luftreifen nach Anspruch 1, **dadurch gekennzeichnet, dass** der Asymmetrieindex AI größer als -85 und kleiner als -30 ist

3. Luftreifen nach Anspruch 1 oder 2, **dadurch gekennzeichnet, dass** die Karkassenlagendeckschicht eine Dicke zwischen 0,9 und 2,0 mm aufweist.

4. Luftreifen nach einem der vorstehenden Ansprüche,
**dadurch gekennzeichnet, dass** die Karkassenlagendeckschicht mit einer Mischung hergestellt ist, umfassend Polyepihalogenhydrin-Kautschuk; epoxidierten Naturkautschuk als eine vernetzbare ungesättigte Polymerkettenbasis; einen Füllstoff und ein Vulkanisationssystem.

5. Luftreifen nach Anspruch 4, **dadurch gekennzeichnet, dass** der Füllstoff ein Material mit einer lamellaren Struktur ist.

6. Luftreifen nach Anspruch 4 oder 5, **dadurch gekennzeichnet, dass** die Mischung umfasst: von 70 bis 90 phr des Polyepihalogenhydrin-Kautschuks; von 5 bis 25 des epoxidierten Naturkautschuks (E-NR); und von 5 bis 25 des Naturkautschuks (NR); wobei das Verhältnis in phr zwischen E-NR und NR zwischen 0,2 und 5,0 liegt.

7. Luftreifen nach Anspruch 6, **dadurch gekennzeichnet, dass** das Verhältnis in phr zwischen E-NR und NR zwischen 1,0 und 3,0 liegt.

8. Luftreifen nach einem der Ansprüche 4 bis 7,
**dadurch gekennzeichnet, dass** der Polyepihalohydrin-Kautschuk ein Kautschuk ist, der von dem Epichlorhydrin-Homopolymer oder von dem Epichlorhydrin/Allylglycidylether-Copolymer oder von dem Epichlorhydrin/Ethylenoxid-Copolymer oder von dem Epichlorhydrin/Ethylenoxid/Allylglycidylether-Terpolymer abgeleitet ist.

9. Luftreifen nach einem der vorstehenden Ansprüche,
**dadurch gekennzeichnet, dass** die Karkassenlagendeckschicht (2) direkt dem inneren Hohlraum (3) zugewandt ist; wobei der Luftreifen (P) frei von einer Innerliner-Schicht ist.

## Revendications

1. Pneumatique (P) comprenant une couche de gommage de nappe carcasse (2) dans laquelle une nappe de renfort (5) est noyée ; ladite nappe de renfort (5) étant disposée à une distance T depuis une surface externe (E) de la couche de gommage de nappe carcasse et à une distance B depuis une surface interne (I) de la couche de gommage de nappe carcasse de façon à définir un indice d'asymétrie AI égal à 100 × (T - B / T + B) ; ladite surface externe (E) étant dirigée vers une bande de roulement (1) du pneumatique (P) et ladite surface interne (I) étant dirigée vers une cavité interne (3) du pneumatique (P) ; ledit indice d'asymétrie AI étant supérieur à -100 et inférieur à 0, ledit pneumatique étant **caractérisé en ce que** ladite couche de gommage de nappe carcasse (2) est constituée d'un composé de caoutchouc unique (4).

2. Pneumatique selon la revendication 1, **caractérisé en ce que** ledit indice d'asymétrie AI est supérieur à -85 et inférieur à -30

3. Pneumatique selon la revendication 1 ou 2, **caractérisé en ce que** la couche de gommage de nappe carcasse a une épaisseur entre 0,9 et 2,0 mm.

4. Pneumatique selon l'une des revendications précédentes, **caractérisé en ce que** ladite couche de gommage de nappe carcasse est fabriquée avec un composé comprenant du caoutchouc polyépihalohydrine ; du caoutchouc naturel époxydé comme base polymère à chaîne insaturée réticulable ; une charge et un système de vulcanisation.

5. Pneumatique selon la revendication 4, **caractérisé en ce que** ladite charge est un matériau à structure lamellaire.

6. Pneumatique selon la revendication 4 ou 5, **caractérisé en ce que** le composé comprend : de 70 à 90 pcc dudit caoutchouc polyépihalohydrine ; de 5 à 25 dudit caoutchouc naturel époxydé (E-NR) ; et de 5 à 25 de caoutchouc naturel (NR) ; le rapport en pcc entre E-NR et NR étant entre 0,2 et 5,0.

7. Pneumatique selon la revendication 6, **caractérisé en ce que** le rapport en pcc entre E-NR et NR est entre 1,0 et 3,0.

8. Pneumatique selon l'une des revendications 4 à 7, **caractérisé en ce que** le caoutchouc polyépihalohydrine est un caoutchouc issu de l'homopolymère épichlorohydrine ou du copolymère épichlorohydrine/éther allylique-glycidylique ou du copolymère épichlorohydrine/oxyde d'éthylène ou du terpolymère épichlorohydrine/oxyde d'éthylène/éther allylique-glycidylique.

9. Pneumatique selon l'une des revendications précédentes, **caractérisé en ce que** ladite couche de gommage de nappe carcasse (2) fait directement face à ladite cavité interne (3) ; ledit pneumatique (P) étant exempt de couche de revêtement intérieur.
